# EUROPEAN PATENT SPECIFICATION

(11) **EP 0 812 881 B1**
(45) Date of publication and mention of the grant of the patent: **07.08.2002**
(21) Application number: 97304074.4
(22) Date of filing: 11.06.1997
(51) Int. Cl.: C08L 15/00, C08K 5/098

(54) **Rubber compound usable in presence of flon and/or freezer oil and vulcanized product thereof**
Kautschukmischung verwendbar in Gegenwart von Flon und/oder Kühlschranköl und vulkanisiertes Produkt daraus
Composition de caoutchouc utilisable en présence de flon et/ou d'huile pour réfrigérateur et produit vulcanisé

(30) Priority: 11.06.1996 JP 17184696
(43) Date of publication of application: 17.12.1997
(73) Proprietor: NICHIAS CORPORATION, Tokyo (JP)
(72) Inventor: Nishimoto, Kazuo, Yokohama-shi, Kanagawa-ken (JP); Yamada, Hitoshi, Sumida-ku, Tokyo (JP); Murakami, Atsushi, Ichikawa-shi, Chiba-ken (JP)
(74) Representative: Allard, Susan Joyce

(56) References cited:
- EP-A- 0 674 121
- EP-A- 0 773 231
- PATENT ABSTRACTS OF JAPAN vol. 095, no. 008, 29 September 1995 & JP 07 118447 A (NOK CORP), 9 May 1995,
- PATENT ABSTRACTS OF JAPAN vol. 012, no. 263 (C-514), 22 July 1988 & JP 63 046241 A (NOK CORP), 27 February 1988,

## Description

The present invention relates to a rubber composition to be vulcanized, which is suitable for use in the presence of flon or freezer oil, and a vulcanized product thereof.

The destruction of the ozone layer is currently considered a serious problem and it is expected that several ozone destroying flon gases will be abolished in the forthcoming years. For this reason, in relation to flon gases used as a cooling medium in freezers and air conditioners, HCFC (flons composed of four elements of C, H, F and Cl), such as R-22 (CHCl₂F), R-123 (CHClFCClF₂), etc., as well as HFC (flons composed of three elements having an ozone destruction index of 0), such as R-134a (CH₂FCF₃), R-407C (mixture of CH₂F₂/CF₃CHF₂/CH₂FCF₃ in 23/25/52 wt.%), are gradually replacing CFC (flons composed of three elements of C, F and Cl), such as R-11 (CCl₃F) and R-12 (CCl₂F₂).

With advancing substitution of such flon cooling mediums, attempts have been made to substitute the rubber raw materials used in sealing parts, for example O-rings used in circulation systems in freezers. For this reason vulcanized rubber compounds based on hydrogenated nitrile rubber have been considered for use with HFC flon cooling mediums.

JP-B-Hei 5-17930 discloses a vulcanized rubber compound for fabricating O-rings which is obtained by adding carbon black of 10 to 150 wt. parts to hydrogenated nitrile rubber of 100 wt. parts. JP-A-Hei 5-65369 discloses a rubber compound having a Mooney viscosity (ML₁₊₄(100°C)) greater than 100 and containing hydrogenated nitrile rubber and an organic peroxide. However, by using the rubber compounds disclosed in the above publications, although it is possible to obtain some resistance to HFC flons, they generally contain carbon black. In this case it is very difficult to have any colour other than black. In order to be able to colour rubber compositions, a method can be adopted where white carbon is used in lieu of carbon black. However, rubber compositions thus obtained have a much lower resistances to HCFC flons and HFC flons than the rubber compositions containing carbon black. For example, in applications where such compositions are used in circulation systems for flon cooling mediums, bubbles or cracks are often produced by decreasing pressure in the circulation systems, for example, when flon is removed from a freezer for displacement or when drive of the freezer is stopped. A rubber composition obtained by adding zinc polymethacrylate, silica and organic peroxide to hydrogenated nitrile rubber is disclosed in JP-A-Hei 3-188138. Although this composition can be coloured, its resistance to HCFC flons and HFC flons is poor and bubbles and cracks are easily produced therein. A rubber composition composed of hydrogenated nitrile rubber and liquid polybutadiene is disclosed in JP-B-Hei 7-35453. By using this composition it is possible to obtain a certain resistance to HFC flons. However carbon black is necessary therefor and it is hence very difficult to colour it. In addition, it also suffers from a high hardness compared with other rubber compositions.

All the rubber compositions based on hydrogenated nitrile rubber have a low resistance to HCFC flons, although they contain no carbon black. Bubbles and cracks can also be produced when such compositions are used in a system relying on an HCFC flon cooling medium, with the result that satisfactory sealing cannot be achieved. In the case where chloroprene rubber (used heretofore in a system relying on an HCFC flon cooling medium) is used in a system having an HFC flon cooling medium, the compression set is great, which also means that a satisfactory sealing function cannot be obtained. For this reason, in the case where a sealing part for an HCFC cooling medium is used erroneously in a system having an HFC flon cooling medium or, conversely, in the case where a sealing part for an HFC cooling medium is used erroneously in a system having an HCFC flon cooling medium, problems may arise in that the sealing function is diminished owing to bubbles and cracks, and also in that the sealing function is diminished owing to an increase in the compression set.

At present, two kinds of freezers are generally produced, one relying on HCFC flon cooling mediums, the other on HFC flon cooling mediums. In order to prevent the erroneous use of a sealing part for an HCFC cooling medium in a system having an HFC flon cooling medium or, conversely, the erroneous use of a sealing part for an HFC cooling medium in a system having an HCFC cooling medium, it would be preferable to use a rubber material having a satisfactory resistance to both the HCFC flon cooling medium and the HFC flon cooling medium. Such rubber compounds have not, however, yet been reported. Accordingly, it has been necessary to use the correct rubber material for sealing parts of a freezer, depending on the type of freezer. In this case, it is preferable that rubber parts used in freezer systems having a HCFC flon cooling medium and those used in systems having a HFC flon cooling medium have different hues. Most chloroprene rubbers, which have been used heretofore in the system having the HCFC cooling medium, contain carbon black and the hue thereof is consequently black. For this reason, it is necessary that the rubber materials used in the system having the HFC flon cooling medium have a hue other than black. Heretofore, rubber compounds having a satisfactory resistance to HFC flons, which can be coloured in a hue other than black, have not been produced.

EP-A-0674121 relates to a toothed belt for a power transmission device.

An object of the present invention is to provide a rubber composition having an excellent resistance to both HCFC flon cooling mediums and HFC flon cooling mediums. Another object of the present invention is to provide a vulcanized rubber composition having an excellent resistance to HFC flon cooling mediums, which can be coloured.

The present inventors have found that the resistance to flons can be improved and the number of cracks produced decreased by adding liquid polybutadiene to hydrogenated nitrile rubber containing carbon black. It was not, however, possible to obtain any satisfactory resistance to either HCFC flons or HFC flons. Further, since this rubber composition contains carbon black, it was difficult to colour it. It was also a serious problem that the hardness of this rubber composition is relatively high.

As a result of the inventors ardent study to address the above objects, they have found that a rubber composition vulcanized by using organic peroxide, composed of hydrogenated nitrile rubber, in which zinc polymethacrylate is finely dispersed, and liquid polybutadiene in common, has an excellent resistance to HFC flons, even if it contains no carbon black. Additionally, an increase in the hardness due to the liquid polybutadiene does not occur. The inventors have furthermore found that in the case where carbon black is added to the rubber composition, it has an excellent resistance to both HCFC flons and HFC flons.

That is, a rubber composition usable in the presence of flon and/or freezer oil according to the present invention is characterized in that it comprises:
(a) hydrogenated nitrile rubber of from 100 to 10 wt. parts, in which zinc polymethacrylate is finely dispersed;
(b) hydrogenated nitrile rubber, whose amount is so determined that the sum of the amount thereof and the amount of the component (a) corresponds to 100 wt. parts;
(c) organic peroxide of from 0.2 to 12 wt. parts for the sum of the components (a) and (b) of 100 wt. parts;
(d) liquid polybutadiene or denatured liquid polybutadiene containing 1, 2 bondings at a ratio greater than approximately 40% among bondings between monomers or from 0.1 to 30 wt. parts for the sum of the components (a) and (b) of 100 wt. parts; and
(e) white carbon selected from one or more of silicic acid hydrate, silicic acid anhydrate and calcium silicate.

Although iodine value, nitrile contents, molecular weight, Mooney viscosity, etc. of hydrogenated nitrile rubber (hereinbelow abbreviated to HNRB) used for the components (a) and (b) according to the present invention are not restricted specifically, at first it is desirable that the central value of the iodine value of HNRB is preferably lower than 50g/100g, more preferably in a region between 3 and 40g/100g, and specifically preferably in a region between 8 and 30g/100g. It is possible to improve further the resistance to flon and freezer oil by using HNRB, the central value of the iodine value of which is smaller than 50g/100g (having a high iodine value) and it is possible to maintain elasticity of rubber at low temperatures by using HNRB having a suppressed iodine value, which is greater than 3g/100g. It is desirable that the central value of the nitrile contents is preferably in a region between 15 and 60%, more preferably in a region between 30 and 55% and specifically preferably in a region between 40 and 50%. It is possible to improve further the resistance to flon and freezer oil by using HNRB, the central value of the nitrile contents of which is greater than 15%, specifically greater than 30%, and it is possible to maintain the resistance to cold by using HHBR, the central value of the nitrile contents is smaller than 60%, specifically smaller than 50%. Further it is desirable that the central value of the Mooney viscosity ML₁₊₄ (100°C) (hereinbelow called Mooney viscosity) is preferably in a region between 55 and 100, more preferably in a region between 65 and 95, and specifically preferably in a region between 75 and 90. The rubber composition can maintain a higher resistance to flon as well as flexibility and resistance to cold by using HNRB, whose Mooney viscosity is in these regions.

Any HNRB, in which zinc polymethacrylate is finely dispersed, can be used for the component (a) according to the present invention without any special restriction, if the state of dispersion of zinc polymethacrylate is good. Hydrogenated nitrile rubber, in which zinc polymethacrylate is finely dispersed, is put on the market e.g. by Nippon Zeon Co., Ltd. with a trademark of ZSC. On the other hand, HNRB, which is the component (b), is put on the market e.g. by Nippon Zeon Co., Ltd. with a trademark of Zetpol and also by Bayer Co. Ltd. with a trademark of Therban. This plurality of hydrogenated nitrile rubbers can be used together and the kinds of hydrogenated nitrile rubbers, which are the component (a) and the component (b), can be different.

Concerning the ratio of the component (a) and the component (b) according to the present invention, when the sum of the component (a) and the component (b) corresponds to 100 wt. parts, it is required that the component (a) corresponds to 100 to 10 wt. parts and the component (b) corresponds to 0 to 90 wt. parts. If the quantity of the component (a) is smaller than 10 wt. parts, no satisfactory resistance to flon can be obtained and bubbles and cracks can be produced. Concerning the ratio of the component (a) and the component (b), since hardness of rubber products is increased when the component (a), i.e. the quantity of zinc polymethacrylate, is too much, it is possible to adjust appropriately the mixing ratio in the region described previously so that the rubber product has a desired hardness. For example, in case where among ZSC of Nippon Zeon Co. Ltd. ZSC having a Mooney viscosity of 85 is used for the component (a) and HNRB having a nitrile contents of 36%, an iodine value of 28g/100g and a Mooney viscosity of 78 is used for the component (b), it is desirable to use the component (a) of 70 to 20 wt. parts and the component (b) of 30 to 80 wt. parts, more preferably the component (a) of 60 to 40 wt. parts and the component (b) in a region between 40 and 60 wt. parts.

When a rubber composition, in which a filling agent such as white carbon, carbon black, etc. is mixed, is used, since hardness of the rubber product is increased, in case where the filling agent is used, a desired hardness can be obtained by reducing the ratio of the component (a). If the component (a) exists excessively, not only the hardness is raised excessively but also hydrolysis of ester oil serving as a freezer oil for the HFC flon cooling mediums is accelerated. Therefore, in this case, a desired hardness can be obtained by reducing the ratio of the component (a) and by using a filling agent such as white carbon, carbon black, etc.

Any organic peroxide, which is the component (c) according to the present invention, can be used without special restriction, if it can be used for vulcanization of usual rubber by peroxide, and more than two kinds of organic peroxides can be used together. As usable organic peroxides, following agents can be cited: e.g. di t-peroxide, dicumyl peroxide, t-butyl cumyl peroxide, 1,1-di (t-butyl peroxy)-3,3,5-trimethyl cyclohexane, 2,5-dimethyl-2,5-di (t-butyl peroxy) hexane, 2,5-dimethyl-2,5-di (t-butyl peroxy) hexine-3, 1,3-di (t-butyl peroxy isopropyl) benzene, 2,5-dimethyl-2,5-di (benzoyl peroxy) hexane, t-butyl peroxy isopropyl carbonate; n-butyl-4,4-di (t-butyl peroxy) valerate, α,α'-bis (t-butyl peroxy-m-isopropyl) benzene, benzoyl peroxide, etc. These organic peroxides mixed previously with calcium carbonate, rubber, etc. can be used also therefor. The amount of these organic peroxides to be added is preferably 0.2 to 12 wt. parts for the sum of the component (a) and the component (b) of 100 wt. parts and more preferably 1 to 10 wt. parts. In case where the added amount of peroxide is smaller than 0.2 wt. part, the resistance of the rubber composition to HFC flon is not so high and on the contrary, in case where it exceeds 12 wt. parts, it is feared that the rubber composition is too hard.

Liquid polybutadiene used as the component (d) according to the present invention has a mean molecular weight of 1000 to 3000 and fluidity at temperatures comprised between 20°C and 39°C. Further it includes more than 40% of 1,2 bondings among different bonding forms between monomers (butadiene, denatured butadiene, etc.). As the structure of monomers in the liquid polybutadiene, apart from poly-1,2-butadiene, 1,2-butadiene and 1,4-trans-butadiene, copolymers with 1,4-cis-butadiene, denatured butadiene (e.g. hydroxylated butadiene, carboxylated butadiene, epoxy butadiene, etc.) can be cited and a plurality of these liquid polybutadienes can be used together.

The liquid polybutadiene used according to the present invention includes more than 40% of 1,2 bondings among different bonding forms between monomers. However, from the point of view of the resistance to flon, it should contain more than 60% and more preferably more than 85% thereof. If 1,2 bondings in the polymer are less than 40%, the resistance to flon can be rather worsened. Liquid polybutadiene including many 1,2 bondings is put on the market by Nippon Soda Co., Ltd. with a trademark of NISSO-PB.

The composed amount of the liquid polybutadiene is 0.1 to 30 wt. parts and more preferably in a region between 5 and 15 wt. parts for the sum of the component (a) and the component (b) of 100 parts. In this region the resistance to flon increases with increasing used amount of the liquid polybutadiene. However, when the used amount of the liquid polybutadiene exceeds 30 wt. parts, the resistance to flon increases not so remarkably, but it is rather worsened and bubbles and cracks can be produced. On the other hand, below 0.1 wt. part, resistances to flon and freezer oil and production of bubbles and cracks of the rubber composition increase not so much.

In case where liquid polybutadiene is added to HNRB consisting of only the component (b), although the resistance to flon is improved, a problem that hardness becomes too high is produced. However, in case where liquid polybutadiene is used together with HNRB, which is the component (a), in which zinc polymethacrylate is finely dispersed, hardness is almost not increased. In addition, the resistance to flon brought by liquid polybutadiene is kept as it is. This was expected not at all.

The resistance to flon of the rubber composition according to the present invention can be further increased by using a reinforcing filling agent such as carbon black, etc. The rubber composition according to the present invention, whose hardness is adjusted by having it contain carbon black and further by decreasing the ratio of the component (a) according to the present invention, has an excellent resistance both to HCFC flon and to HFC flon. Therefore sealing parts made thereof can be used in common in systems using HCFC flon cooling mediums and in systems using HFC flon cooling mediums. As kinds of usable carbon blacks, e.g. SAF carbon, HAF carbon, FEF carbon, GPF carbon, SRF carbon, FT carbon, MT carbon, etc. can be cited and they can be used alone or in combination of more than two kinds.

In case where the rubber composition contains no carbon black, it is possible to obtain a rubber composition having a good corolation property and an excellent resistance to HFC flon. This rubber composition can be colored in an arbitrary hue by adding appropriate pigments thereto so that it can be easily discerned from black rubber parts such as chloreprene rubber containing carbon black used in many systems using HCFC flon cooling mediums. For this reason, rubber compositions according to the present invention, which are colored in arbitrary hues, are suitable for rubber materials for HFC flon cooling mediums, in case where rubber parts should be discerned for systems using HCFC cooling mediums and systems using HFC cooling mediums.

The presence of white carbon in the rubber composition according to the present invention provides an excellent resistance to HFC flon and, further, the excellent coloration property is maintained almost as it is. Rubber compositions, whose hardness is regulated by having them contain white carbon and by decreasing the ratio of the component (a) according to the present invention, have a higher resistance to HFC flon. They have a higher resistance also to HCFC flon with respect to usual rubber compositions.

The white carbon is selected from one or more of silicic acid hydrate, silicic acid anhydrate and calcium silicate, If a coupling agent, more preferably a silane coupling agent, is used together with white carbon, the resistance to flon is further improved.

The rubber composition according to the present invention can contain, apart from the component described above, added materials such as a deterioration preventing agent such as an ozone worsening preventing agent, an oxidation preventing agent, etc., a bridging aiding agent for peroxide bridging such as triaryl cyanurate, trimethylol propane trimethacrylate, etc., a filling agent, such as talc, clay, etc., reinforcing fiber such as aramid fiber; glass fiber, etc., an adhesive power giving agent, a plasticizer, a coloring agent, a processing aiding agent, etc.

For producing the rubber composition according to the present invention, any usual rubber kneading-vulcanizing method can be used. Rubber kneading can be effected e.g. by means of an open roll, a Banbury mixer, a press kneader, an extruder, etc., and molding and vulcanization can be effected by means of an injection molding machine, a pressure molding machine, a vulcanizing press, etc. Vulcanization can be effected in 3 to 60 minutes e.g. at temperatures comprised between 150°C and 250°C and further secondary curing may be effected in 1 to 24 hours in an oven of 120 to 200°C.

The rubber composition according to the present invention has an excellent resistance to flon and freezer oil and further a very high resistance to flon for preventing production of bubbles and cracks. For example, in case where it is used in a circulation system using a flon cooling medium, bubbles and cracks are produced very hardly by decreasing pressure in the circulation system, when flon is removed for displacement of a freezer, etc. or when drive of the freezer is stopped. Consequently the rubber composition according to the present invention is suitable for use as rubber material for sealing parts such as O-rings used in a freezer, an air conditioner, etc., in particular in compressors thereof.

### DESCRIPTION OF THE PREFERRED EMBODIMENTS

Hereinbelow the present invention will be explained concretely, using several embodiments. However the present invention is not restricted at all to the following embodiments.

Rubber samples of EMBODIMENTS 1 to 7 and EXAMPLES FOR COMPARISON 1 to 5 were prepared according to compositions indicated in TABLES 1 and 2 and immersion tests as well as bubble and crack tests thereof were effected by using flon and freezer oil.

The rubber samples were prepared by mixing composition agents while kneading rubber by means of an open roll, heating it in 10 minutes at 170°C by means of a hot press to form it in a sheet shape or a JIS P16 O-ring shape and then effecting secondary vulcanization in 4 hours at 150°C in an oven.

Resistance-to-flon tests were effected as follows. Six JIS P16 O-ring shaped samples were used. The samples were immersed in a mixed solution of R-407C+ester oil (R407C: 95 wt.% / ester oil:5 wt.%) or a mixed solution of R-22+mineral oil (R22: 95 wt.% / mineral oil: 5 wt.%) in 22 hours at 70°C within a pressure vessel. Therefore the samples were taken out rapidly and heated in 1 hour in an oven of 120°C. When bubbles and cracks were produced, the number thereof was counted and transformed into a number of cracks per one piece of the O-ring samples. Hardness was measured according to JIS K6253, using a samples formed in a sheet shape.

Results obtained for the different embodiments and examples for comparison are indicated in TABLES 1 and 2.

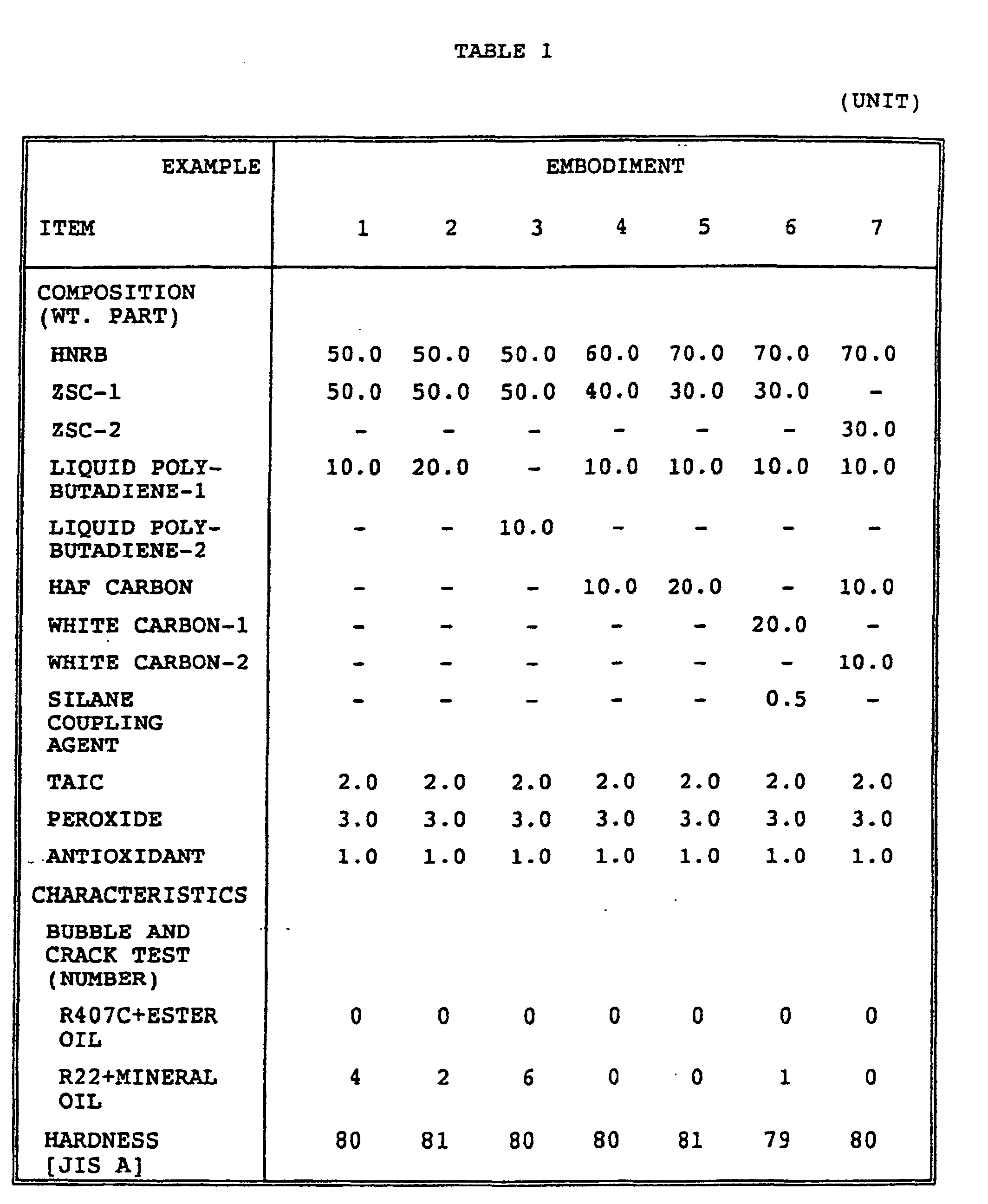

Embodiments 1 to 5 are not in accordance with the present invention.
- HNRB:: hydrogenated nitrile rubber having a nitrile contents of 36%, an iodine value of 28g/100g and a Mooney viscosity of 78.
- ZSC-1:: hydrogenated nitrile rubber produced by Nippon Zeon Co., Ltd., in which zinc polymethacrylate is finely dispersed, having a Mooney viscosity of 80.
- ZSC-2:: hydrogenated nitrile rubber produced by Nippon Zeon Co., Ltd., in which zinc polymethacrylate is finely dispersed, having a Mooney viscosity of 85.
- Liquid polybutadiene-1:: 1,2 bondings more than 90%
- Liquid polybutadiene-2:: 1,2 bondings more than 65%
- White carbon-1:: silicic acid hydrate, specific superficial area (by the BET method) 70 to 110m²/g, primary particle diameter 32mm, pH 7.5 to 9.0.
- White carbon-2:: silicic acid hydrate, specific superficial area (by the BET method) 175 to 225m²/g, primary particle diameter 12mm, pH 4.0 to 4.5.
- Silane coupling agent:: mercapto silane
- TAIC:: triaryl isocyanurate
- Peroxide:: dicumyl peroxide

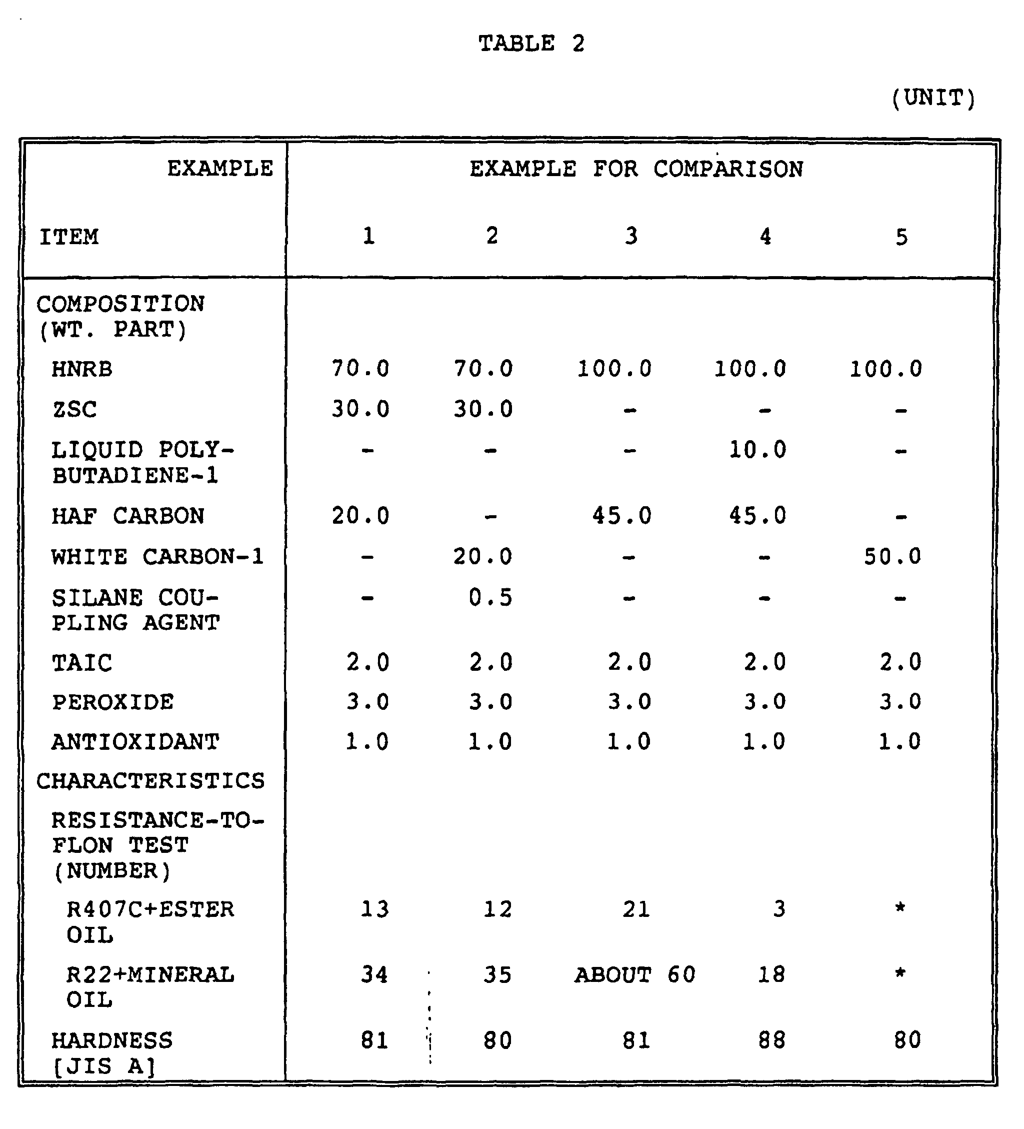

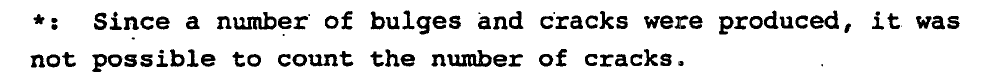

- HNRB:: hydrogenated nitrile rubber having a nitrile contents of 36%, an iodine value of 28g/100g and a Mooney viscosity of 78.
- ZSC:: hydrogenated nitrile rubber produced by Nippon Zeon Co., Ltd., in which zinc polymethacrylate is finely dispersed, having a Mooney viscosity of 80.
- Liquid polybutadiene-1:: 1,2 bondings more than 90%
- White carbon-1:: silicic acid hydrate, specific superficial area (by the BET method) 70 to 110m²/g, primary particle diameter 32mm, pH 7.5 to 9.0.
- Silane coupling agent:: mercapto silane
- TAIC:: triaryl isocyanurate
- Peroxide:: dicumyl peroxide

From the results it was verified that the rubber composition and the vulcanized product thereof according to the present invention have an excellent resistance for both the systems using cooling mediums, which are HCFC flon cooling mediums and HFC flon cooling mediums, and have excellent characteristics as sealing parts for flon cooling mediums, which can be colored.

## Claims

1. A rubber composition for use in the presence of flon and/or freezer oil, comprising:
(a) hydrogenated nitrile rubber of from 100 to 10 wt. parts, in which zinc polymethacrylate is finely dispersed;
(b) hydrogenated nitrile rubber, whose amount is so determined that the sum of the amount thereof and the amount of the component (a) corresponds to 100 wt. parts;
(c) organic peroxide of from 0.2 to 12 wt. parts for the sum of the components (a) and (b) of 100 wt. parts;
(d) liquid polybutadiene or denatured liquid polybutadiene containing 1,2 bondings at a ratio greater than approximately 40% among bondings between monomers of from 0.1 to 30 wt. parts for the sum of the components (a) and (b) of 100 wt. parts; and
(e) white carbon selected from one or more of silicic acid hydrate, silicic acid anhydrate and calcium silicate.

2. A rubber composition as claimed in claim 1, further comprising carbon black.

3. A rubber composition as claimed in claim 1 or claim 2, wherein the hydrogenated nitrile rubber has an iodine value of less than 50g/100g, preferably in the range of from 3 to 40g/100g.

4. A rubber composition as claimed in any one of the preceding claims, wherein the hydrogenated nitrile rubber has a nitrile content in the range of from 15 to 60%, preferably from 30 to 55%.

5. A rubber composition as claimed in any one of the preceding claims, wherein the hydrogenated nitrile rubber has a Mooney viscosity in the range of from 55 to 100, preferably from 65 to 95.

6. A rubber composition as claimed in any one of the preceding claims, further comprising one or more of an ozone worsening preventing agent, an oxidation preventing agent, a bridging aiding agent, a filling agent, a reinforcing fiber, an adhesion promoter, a plasticizer, a colouring agent and a processing aiding agent.

7. A rubber composition as claimed in any one of the preceding claims, wherein a coupling agent, preferably a silane coupling agent is used together with the white carbon.

8. A molding made from a rubber composition as claimed in any one of the preceding claims.

9. A molding as claimed in claim 8 which has been vulcanized.

10. A molding as claimed in claim 8 or claim 9 which is an O-ring for a freezer or an air conditioner.

11. The use of a rubber composition in the presence of flon and/or freezer oil, wherein the composition comprises:
(a) hydrogenated nitrile rubber of from 100 to 10 wt. parts, in which zinc polymethacrylate is finely dispersed;
(b) hydrogenated nitrile rubber, whose amount is so determined that the sum of the amount thereof and the amount of the component (a) corresponds to 100 wt. parts;
(c) organic peroxide of from 0.2 to 12 wt. parts for the sum of the components (a) and (b) of 100 wt. parts;
(d) liquid polybutadiene or denatured liquid polybutadiene containing 1,2 bondings at a ratio greater than approximately 40% among bondings between monomers of from 0.1 to 30 wt. parts for the sum of the components (a) and (b) of 100 wt. parts; and
(e) white carbon.

## Patentansprüche

1. Kautschukzusammensetzung zur Verwendung in Gegenwart von Flon und/oder Kältemaschinenöl, die folgendes umfaßt:
(a) hydrierten Nitrilkautschuk von 100 bis 10 Gewichtsteilen, in dem Zinkpolymethacrylat fein dispergiert ist;
(b) hydrierten Nitrilkautschuk, dessen Menge so festgelegt ist, daß die Summe der Menge hiervon und der Menge des Bestandteils (a) 100 Gewichtsteilen entspricht;
(c) organisches Peroxid von 0,2 bis 12 Gewichtsteilen zur Summe der Bestandteile (a) und (b) von 100 Gewichtsteilen;
(d) flüssiges Polybutadien oder denaturiertes flüssiges Polybutadien, das 1,2- Bindungen in einem Verhältnis von mehr als ungefähr 40 % der Bindungen zwischen den Monomeren enthält, von 0,1 bis 30 Gewichtsteilen zur Summe der Bestandteile (a) und (b) von 100 Gewichtsteilen; und
(e) Weißruß, der aus Kieselsäurehydrat, Kieselsäureanhydrat oder Kalziumsilikat, oder mehreren davon, ausgewählt ist.

2. Kautschukzusammensetzung nach Anspruch 1, die weiterhin Ruß umfaßt.

3. Kautschukzusammensetzung nach Anspruch 1 oder Anspruch 2, bei der der hydrierte Nitrilkautschuk eine Iodzahl von weniger als 50g/100g, vorzugsweise im Bereich von 3 bis 40g/100g, aufweist.

4. Kautschukzusammensetzung nach einem der vorhergehenden Ansprüche, wobei der hydrierte Nitrilkautschuk einen Nitrilgehalt im Bereich von 15 bis 60 %, vorzugsweise von 30 bis 55 %, aufweist.

5. Kautschukzusammensetzung nach einem der vorhergehenden Ansprüche, wobei der hydrierte Nitrilkautschuk eine Mooney-Viskosität im Bereich von 55 bis 100, vorzugsweise von 65 bis 95, aufweist.

6. Kautschukzusammensetzung nach einem der vorhergehenden Ansprüche, die weiterhin einen oder mehrere der folgenden Zusätze umfaßt: ein Mittel zur Vermeidung einer Verschlechterung durch Ozon, ein Mittel zur Vermeidung einer Oxidation, ein Hilfsmittel zur Brückenbildung, ein Füllmittel, eine Verstärkungsfaser und einen Haftverstärker, einen Weichmacher, einen Farbstoff, ein Verarbeitungshilfsmittel.

7. Kautschukzusammensetzung nach einem der vorhergehenden Ansprüche, bei der ein Kopplungsmittel, vorzugsweise ein Silan-Kopplungsmittel, zusammen mit dem Weißruß verwendet wird.

8. Formteil, das aus einer Kautschukzusammensetzung nach einem der vorhergehenden Ansprüche hergestellt ist.

9. Formteil nach Anspruch 8, das vulkanisiert worden ist.

10. Formteil nach Anspruch 8 oder Anspruch 9, das ein Runddichtring für eine Kühlmaschine oder eine Klimaanlage ist.

11. Verwendung einer Kautschukzusammensetzung in Gegenwart von Flon und/oder Kältemaschinenöl, wobei die Zusammensetzung folgendes umfaßt:
(a) hydrierten Nitrilkautschuk von 100 bis 10 Gewichtsprozent, in dem Zink-Polymethacrylat fein dispergiert ist;
(b) hydrierten Nitrilkautschuk, dessen Menge so festgelegt ist, daß die Summe der Menge hiervon und der Menge des Bestandteils (a) 100 Gewichtsteilen entspricht;
(c) organisches Peroxid von 0,2 bis 12 Gewichtsteilen zur Summe der Bestandteile (a) und (b) von 100 Gewichtsteilen;
(d) flüssiges Polybutadien oder denaturiertes flüssiges Polybutadien, das 1,2 Bindungen in einem Verhältnis von mehr als ungefähr 40 % der Bindungen zwischen den Monomeren enthält, von 0,1 bis 30 Gewichtsteilen zur Summe der Bestandteile (a) und (b) von 100 Gewichtsteilen; und
(e) Weißruß.

## Revendications

1. Composition de caoutchouc destinée à être utilisée en présence de flon et/ou d'une huile pour réfrigérateur, comprenant :
(a) un caoutchouc nitrile hydrogéné en une quantité de 100 à 10 parties en poids, dans lequel est dispersé finement du polyméthacrylate de zinc ;
(b) un caoutchouc nitrile hydrogéné, dont la quantité est déterminée de telle sorte que la somme de sa quantité et de la quantité du constituant (a) corresponde à 100 parties en poids ;
(c) un peroxyde organique en une quantité de 0,2 à 12 parties en poids sur la base de la somme des constituants (a) et (b) égale à 100 parties en poids ;
(d) du polybutadiène liquide ou polybutadiène liquide dénaturé contenant des liaisons 1,2 en une proportion supérieure à approximativement 40 % des liaisons entre les monomères, en une quantité de 0,1 à 30 parties en poids de la somme des constituants (a) et (b) égale à 100 parties en poids ; et
(e) du "carbone blanc" consistant en un ou plusieurs composés choisis entre l'hydrate d'acide silicique, l'anhydrate d'acide silicique et le silicate de calcium.

2. Composition de caoutchouc suivant la revendication 1, comprenant en outre du noir de carbone.

3. Composition de caoutchouc suivant la revendication 1 ou la revendication 2, dans laquelle le caoutchouc nitrile hydrogéné a un indice d'iode inférieur à 50 g/100 g, de préférence compris dans l'intervalle de 3 à 40 g/100 g.

4. Composition de caoutchouc suivant l'une quelconque des revendications précédentes, dans laquelle le caoutchouc nitrile hydrogéné a une teneur en nitrile comprise dans l'intervalle de 15 à 60 %, de préférence de 30 à 55 %.

5. Composition de caoutchouc suivant l'une quelconque des revendications précédentes, dans laquelle le caoutchouc nitrile hydrogéné a une viscosité Mooney comprise dans l'intervalle de 55 à 100, de préférence de 65 à 95.

6. Composition de caoutchouc suivant l'une quelconque des revendications précédentes, comprenant en outre un ou plusieurs des agents consistant en un agent d'inhibition d'aggravation par l'ozone, un inhibiteur d'oxydation, un adjuvant de pontage, une charge, une fibre de renforcement, un activateur d'adhérence, un plastifiant, un colorant et un adjuvant de traitement.

7. Composition de caoutchouc suivant l'une quelconque des revendications précédentes, dans laquelle un agent de couplage, de préférence un agent de couplage du type silane, est utilisé conjointement avec le "carbone blanc".

8. Pièce moulée préparée à partir d'une composition de caoutchouc suivant l'une quelconque des revendications précédentes.

9. Pièce moulée suivant la revendication 8, qui a été vulcanisée.

10. Pièce moulée suivant la revendication 8 ou la revendication 9, qui est un joint torique pour un réfrigérateur ou un conditionneur d'air.

11. Utilisation d'une composition de caoutchouc en présence de flon et/ou d'une huile de réfrigérateur, dans laquelle la composition comprend :
(a) un caoutchouc nitrile hydrogéné en une quantité de 100 à 10 parties en poids, dans lequel est dispersé finement du polyméthacrylate de zinc ;
(b) un caoutchouc nitrile hydrogéné, dont la quantité est déterminée de telle sorte que la somme de la quantité de ce caoutchouc et de la quantité du constituant (a) corresponde à 100 parties en poids ;
(c) un peroxyde organique en une quantité de 0,2 à 12 parties en poids sur la base de la somme des constituants (a) et (b) égale à 100 parties en poids ;
(d) un polybutadiène liquide ou polybutadiène liquide dénaturé contenant des liaisons 1,2 en une proportion supérieure à approximativement 40 % des liaisons entre les monomères, en une quantité de 0,1 à 30 parties en poids sur la base de la somme des constituants (a) et (b) égale à 100 parties en poids ; et
(e) du "carbone blanc".
